# EUROPEAN PATENT SPECIFICATION

(11) **EP 0 658 250 B1**
(45) Date of publication and mention of the grant of the patent: **07.01.1998**
(21) Application number: 93919261.3
(22) Date of filing: 03.09.1993
(51) Int. Cl.: G01N 29/24, F16B 41/00

(54) **ULTRASONIC SEALING BOLTS AND IDENTIFICATION BOLTS**
Ultraschall-Dichtungsbolzen und Identifikationsbolzen
BOULONS DE SCELLEMENT A ULTRASONS ET BOULONS D'IDENTIFICATION

(30) Priority: 03.09.1992 GB 9218666
(43) Date of publication of application: 21.06.1995
(73) Proprietor: EUROPEAN ATOMIC ENERGY COMMUNITY (EURATOM), 2920 Luxembourg (LU)
(72) Inventor: D'AGRAIVES, Bertrand, Causse, I-21014 Laveno (IT); TOORNVLIET, Jan, I-21030 Orino (IT); MASCETTI, Ermanno, I-21010 Germignaga (IT)
(74) Representative: Baverstock, Michael George Douglas
(86) International application number: EP9302387
(87) International publication number: WO9406006

(56) References cited:
- EP-A- 0 035 323
- EP-A- 0 445 506
- DE-A- 2 403 635
- GB-A- 2 067 699
- US-A- 4 294 122

## Description

The present invention relates to ultrasonic sealing bolts and identification bolts for use in sealing containers holding dangerous substances or sensitive or valuable materials, for example, fissile materials.

Within the framework of Nuclear Safeguards, there is a demand for a robust and durable system of seals making possible the monitoring, identification and verification, over a period of several years, of containers used for the conveyance and then storage under water of fissile materials to be reprocessed.

There is also a demand for an identification system, for example, for nuclear transportation casks, or for other movable structures of strategic value (containers, underframes, guns, etc.) which have to be supervised or indexed. This system will have to use, as "markers", elements which can withstand the severe operating conditions of the structure on which they are mounted.

The idea of using a random distribution of defects in a stable structure for recognition by ultrasonic means is already known and is derived directly from non-destructive testing techniques. At the beginning of the 1980s, the applicants studied various solutions and, in particular, prototype seals for fuel elements. The initial solutions encountered problems in respect of the reproducibility of the identity reading and were not provided with integrity control. These systems are such that it is not possible to identify a "broken" seal. A solution is used in Canada for steady stacks of irradiated fuel elements, based on another method of generating an ultrasonically measurable random signature. However, this kind of seal cannot be identified once it has been broken.

Further prior art is described in GB-A-2,067,699 which discloses a tamper-proof system primarily intended to seal commodity meters. A bolt has a two part head held together by a breakzone such that when the bolt is fastened to a given torque, the breakzone fractures and the head is free to move in a plastic cup. If the bolt is to be unfastened, the head must be disengaged from the cup and this can only be achieved by damaging the cup visibly, thus indicating tampering.

US-A-4,294,122 describes a bolt and an apparatus for mounting the bolt. The purpose of the combination of bolt and mounting apparatus is to fasten the bolt precisely at a predetermined load. A transducer is mounted in the bolt for obtaining preload measurements.

EP-A-4,455,506 discloses a system similar to that described in US-A-4,294,122. The purpose of the apparatus is to mount a bolt and test its preload. There is no provision for determining the specific identity of the bolt.

The latest solutions proposed by the applicants for fuel elements resolved the two problems of reproducibility of the identity reading and introduced a device enabling integrity control to be effected. Although they are well suited to application to a boiling water fuel element (modified in the factory as required), they are not suitable for direct mounting on containers with bolted-on covers.

According to the present invention there is provided a sealing bolt means for sealing the lid of a container to the body of a container, the sealing bolt means comprising a head and a body which interlocks the lid and body of the container, the internal structure of the head being constructed such that it is at least partially deformed when an attempt is made to remove the sealing bolt means from the container onto which the bolt has been secured and tightened, wherein the internal structure of the head comprises a plurality of randomly arranged stacked discs, each disc having one or more voids therein thereby providing a specific identity for each sealing bolt means.

Preferably, the body of the sealing bolt has a threaded shank which can be threaded into the container.

Preferably, the body of the sealing bolt is hollow and comprises clamping elements to secure the sealng bolt means to a container having a pre-installed dowel or pin interlocking the lid and body-of tne container.

Preferably, the internal structure of the head comprises a pattern of cavities which can be sensed ultrasonically.

Preferably, the sealing bolt means further comprises a frangible element within the internal structure of the head which breaks in a predetermined position when an attempt is made to remove the sealing bolt means from the container.

Preferably, the frangible element has a region of reduced thickness thereby providing a weak point in the element.

Preferably, the head is adapted to co-operate with a reading device which can generate an ultrasonic signal and compare the ultrasonic signal reflected by the internal structure of an untampered sealing bolt means with that reflected by a tampered sealing bolt means or a sealing bolt means which has become loosened after having been tightened adequately.

The present invention also provides the use of the sealing bolt means according to any of claims 1 to 8 in combination with a reading device comprising a transducer which can generate an ultrasonic signal and sense the signal reflected by the internal structure of the sealing bolt means as defined.

In a further aspect, the present invention provides the use of a sealing bolt means as defined in claim 1 in a method of testing for tampering of the sealing bolt means comprising the steps of applying a reading means to the head of the sealing bolt means, generating an ultrasonic signal and sensing the signal reflected from the internal structure of the sealing bolt means, and comparing the reflected signal with the signal reflected from an untampered sealing bolt means to determine whether tampering has occurred or whether the sealing bolt means has been untightened.

Preferably, both the specific identity and the integrity of the internal structure are read simultaneously.

The present invention also provides the use of a sealing bolt means as defined in claim 1 in combination with a reading device comprising a reading head, means for fitting the reading device to the sealing bolt means as defined, a transducer and an ultrasonic signal generating means, which device determines the identity and/or integrity of the internal structure of the sealing bolt means wherein the transducer rotates in close vicinity to the sealing bolt means thereby recording the ultrasonic signal reflected from the internal strucutre of the sealing bolt means.

The present invention is based on the substitution of one (or more) of the standard bolts for container covers with one (or more) individually identifiable "special" bolts, which make it possible to verify, when inspected, whether or not they have been unscrewed or removed for fraudulent opening. The basic idea was to attempt to incorporate the essential elements of a fuel element seal, namely the identity marking and the integrity control device, within an assembly which still retains the mechanical function of an ordinary bolt.

A preferred embodiment of the present invention will now be described in detail, by way of example only, with reference to the accompanying drawings, of which:
Figure 1 depicts a container sealed by a number of standard sealing bolts and a reading device, one of the sealing bolts being in accordance with the present invention;
Figure 2a is a cross sectional view of a preferred embodiment of a sealing bolt in accordance with the present invention;
Figures 2b and 2c show detail of the component (2) in Figure 2a. Figure 2b is a cross sectional view and Figure 2c is a view from below;
Figure 3 shows detail of the sealing-bolt of the present invention fitted to the adapter of a reading head as during verification;
Figures 4a and 4b depict the bottom and top respectively of a reading device;
Figure 5a shows detail of the adapter in Figure 3 and Figure 5b shows the relative location of the transducer located therein;
Figure 6 is a cross sectional view of the reading device without the adapter as shown in Figure 1;
Figure 7 depicts the handle of a fitting implement;
Figure 8 depicts the clamp of a fitting implement used for both loosening and removing standard or "special" sealing bolts and installing and tightening such bolts;
Figure 9a depicts graphically a typical signal recorded by the measuring station connected to the transducer;
Figure 9b shows a series of operating parameters of the kind issued when using the system in a laboratory; and
Figure 10 depicts a storage pond holding a number of containers sealed by sealing bolts in accordance with the present invention;
Figure 11 depicts an alternative sealing bolt in accordance with the present invention;
Figures 12a and 12b show a sealing bolt in accordance with the present invention secured to a container via an intermediate element;
Figure 13 depicts an ultrasonic testing system in accordance with a preferred embodiment of the present invention.

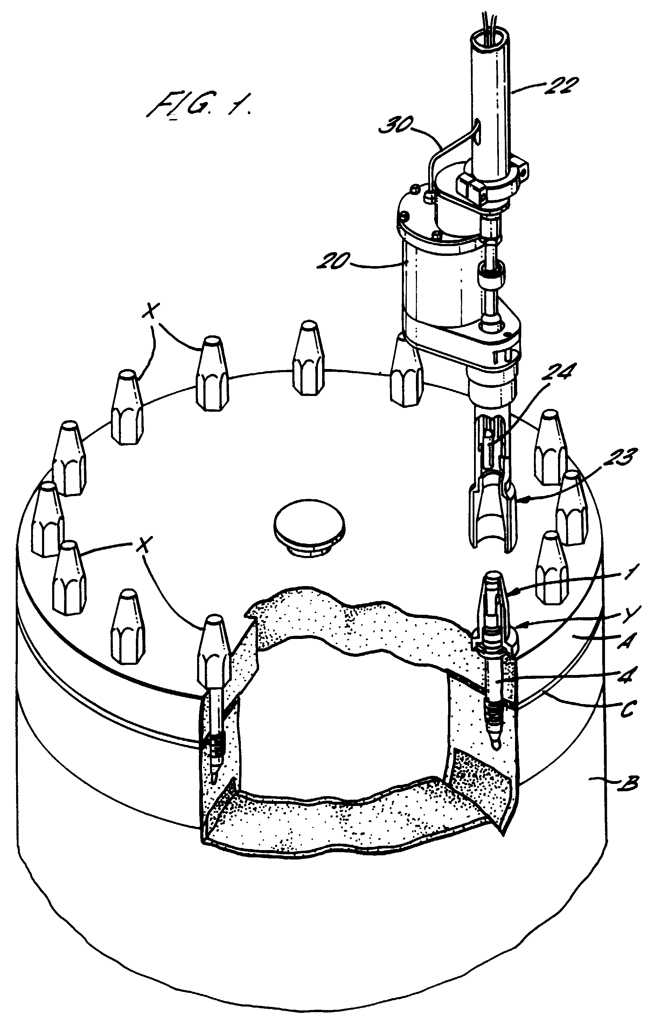

A sealing-bolt Y in accordance with the present invention, is shown in Figure 1, in which the hexagonal head 1 of the bolt ends in a cone (similar to the cone of a standard bolt) to perfect the fitting of the reading device on the bolt. The "special" bolts have the same appearance and can be installed and tightened by the operator in the same manner and with the same torque as the standard bolts which they replace.

The standard bolts X are shown in Figure 1 as well as a "special" bolt Y. The standard bolts X and "special" bolt Y seal the lid A to the body B of a container - a gasket C being located between the lid A and body B.

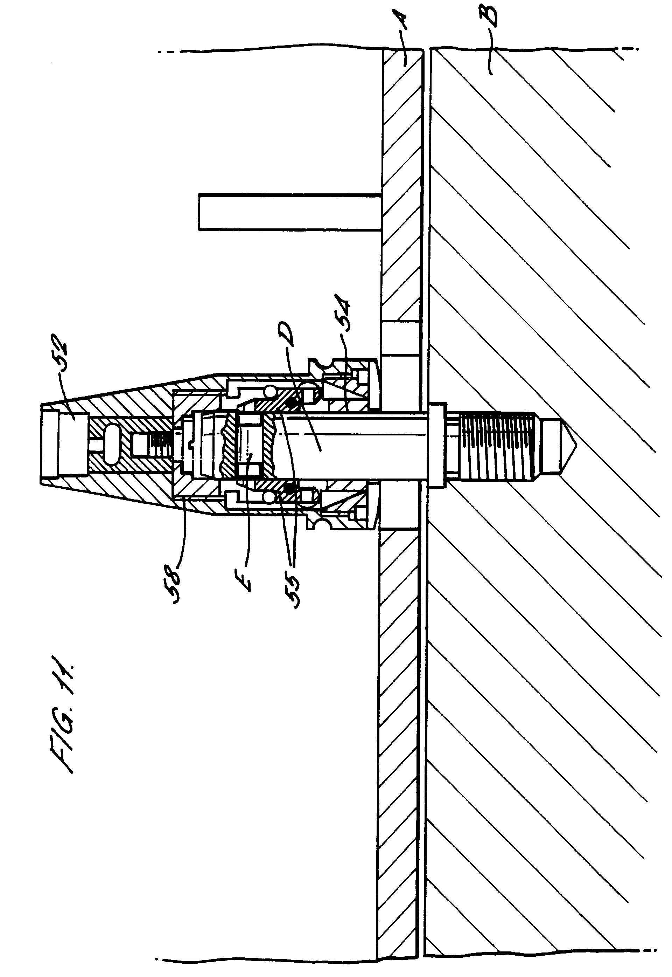

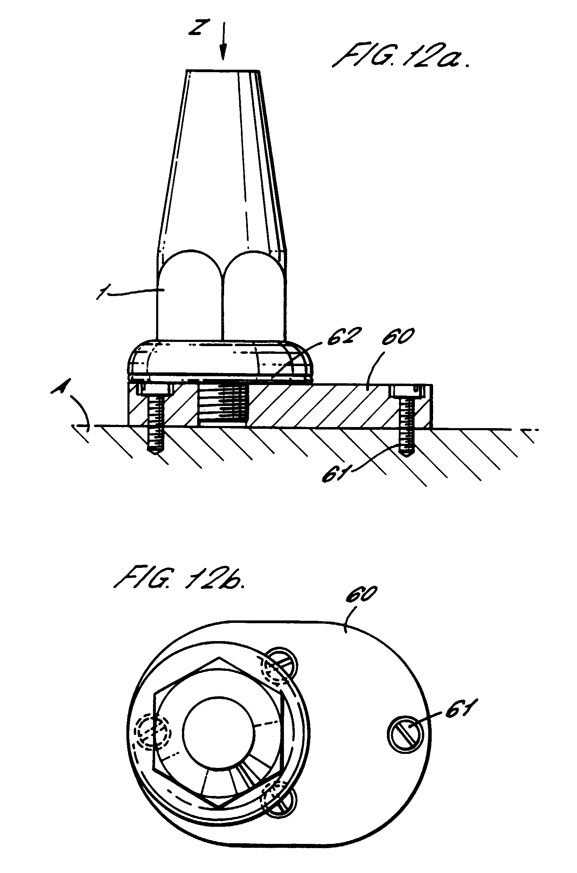

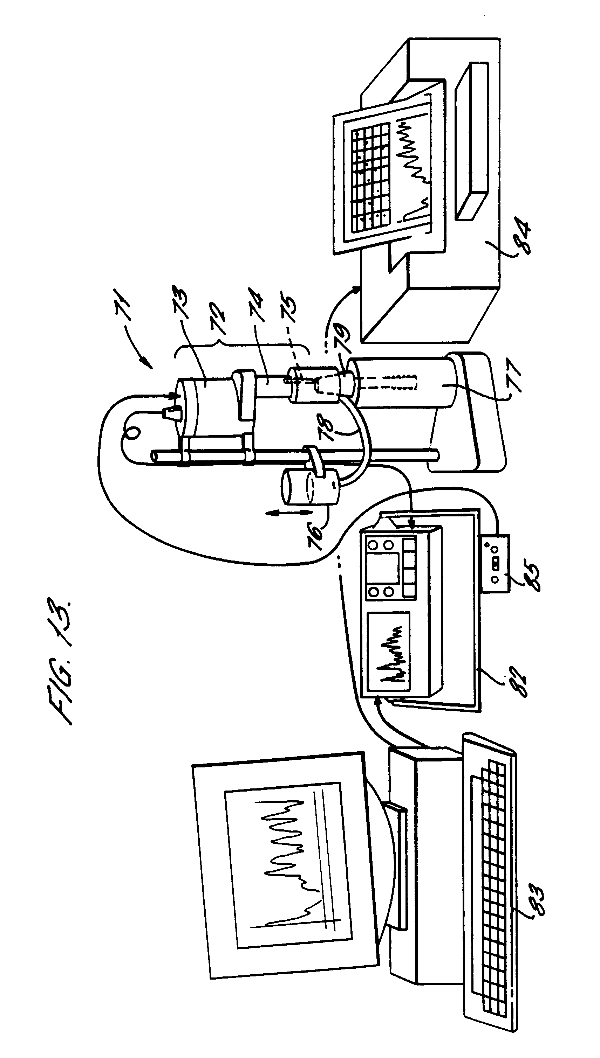

For the identification system, the proposed solution is based on screwing a sealing bolt directly on to the structure to be "marked" (identified) or by means of a non-detachable intermediate member (see Figure 12a).

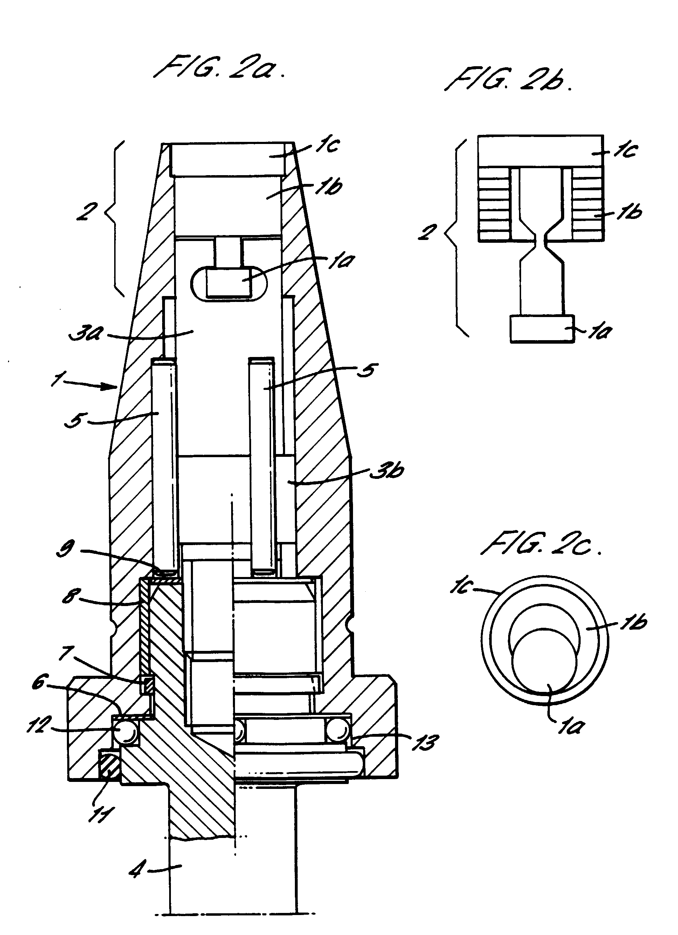

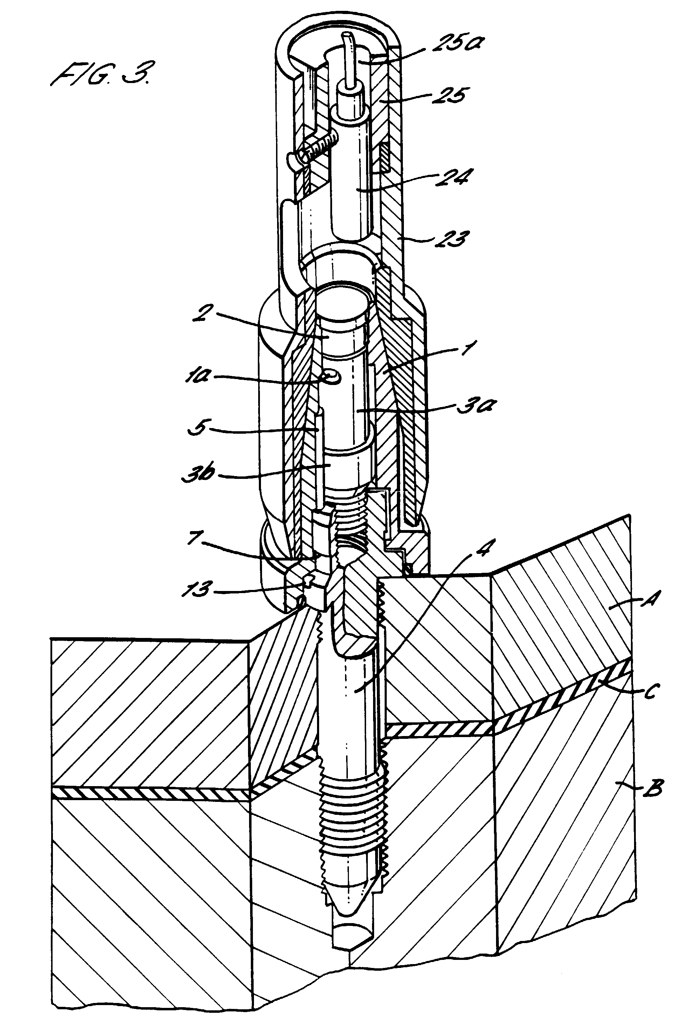

In addition to the sealing bolt Y itself, the solution comprises developing a complete system for its installation, verification and removal, these operations having to be able to be carried out under water or in the open air. In fact, the reading head of the reading device is the essential implement enabling verification of the sealing bolt to be effected. It was designed specifically to allow the examination of this type of seal and the scanning of its identity by a transducer rotating under accurate relative positioning conditions. As is evident from Figures 1 and 3, repositioning accuracy is achieved by means of an adapter 23 which ensures perfect cone-to-cone fitting, whatever the length of the implement, as well as by means of accurate guidance of the transducer-holder barrel 25.

Figure 2a is a preferred embodiment of a sealing-bolt Y having a head 1 and a long shank or a short shank 4.

The sealing-bolt comprises a seal "core" which is component 2, the core incorporates in a limited volume, a delay line block lc, a scattering of cavities providing the echoes generating the signature 1b, as well as a breaking bar 1a, rupture of which will be detected ultrasonically. The core is produced in accordance with an original production process involving, inter alia, brazing the assembly. Small steel washers are notched and stacked in random manner to form the signature 1b and a delay line block 1c is provided with a breaking bar 1a incorporated in the component. Details of the component 2 can be seen in Figures 2b and 2c. The cylindrical "core" 2 with a volume of approximately 1 cm³ represents the "centre" of the sealing bolt Y. It is coaxially mounted and is welded to the top of the head 1 which is the upper portion of the bolt. The reading head 23 of the reading device (Figure 3), which is fitted on to the conical part of the head 1 at the moment of verification, enables the transducer 24 incorporated therein to rotate eccentrically at a given distance (approximately 2.5 cm) from the core 2, describing a small circle (with a radius of approximately 3.5 mm) and enabling it to examine, during a single revolution, both the cavities defining the identity signature and the reduced section of the breaking bar la defining the integrity of the sealing bolt.

A one-way rotating mechanism 13 connects the head 1 and the shank 4 and makes it possible to transmit, by means of jamming balls 12, to the shank 4 and in one direction the tightening torque applied to the head 1.

A breaking mechanism 3a,3b connects the core 2 to the (reverse) threaded head of the shank 4 and makes it possible via the tension member 3 to break by tension the breaking bar la of the core 2 upon starting to "unscrew" the sealing-bolt with a reverse weak torque, i.e causing it to rotate in the direction permitted by the one-way rotating mechanism 13. At the end of travel, after the bar 1a has been broken with a torque of about 20 Nm, the tension member 3, which slides without relative rotation in the component 1 due to guiding rollers 5, abuts against the end of the thread of the shank 4 and a high unscrewing torque (about 70 Nm) can then be applied thereto, which causes the sealing bolt to be unscrewed from the body of the container into which it had been screwed.

Connecting or intermediate components, such as jamming balls 12, clip 7 sliding rings 6,9 and bushings 8, rollers 5, 0-rings 11, take care of the clamping, locking, sliding, guiding and sealing operations which are necessary for the correct operation of the assembly.

In addition to the sealing bolt, the rest of the system will also be described. Figure 3 shows an exploded view of the sealing bolt and also the reading head adapter 23 in its position "fitted" on to the top of the sealing bolt at the instant of reading. The adapter 23 is essential to the accurate positioning of the transducer 24 with respect to the sealing bolt Y.

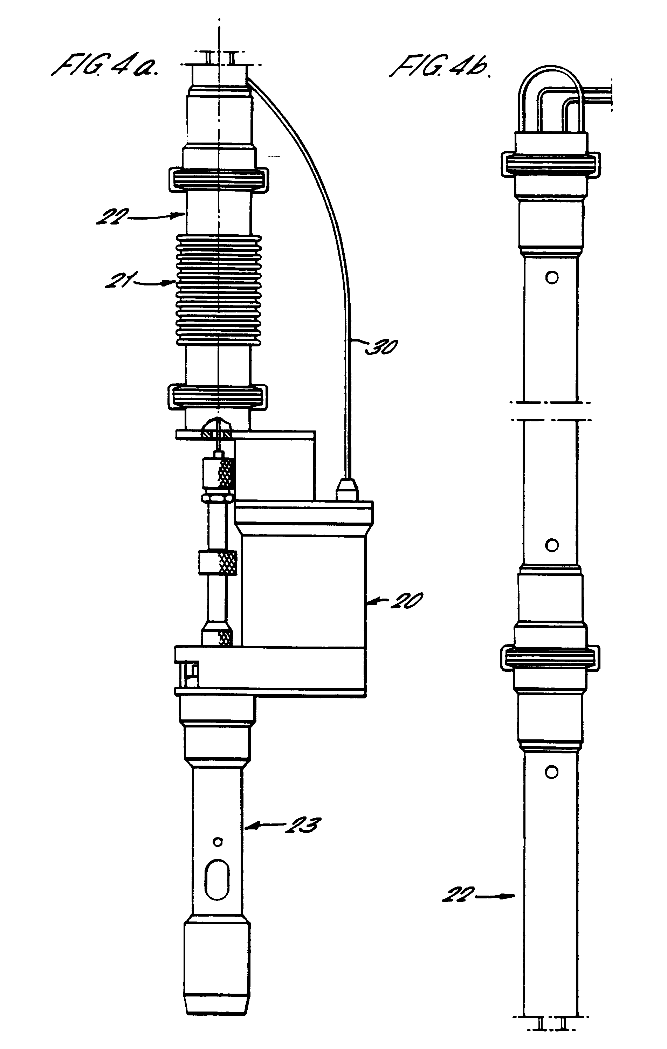

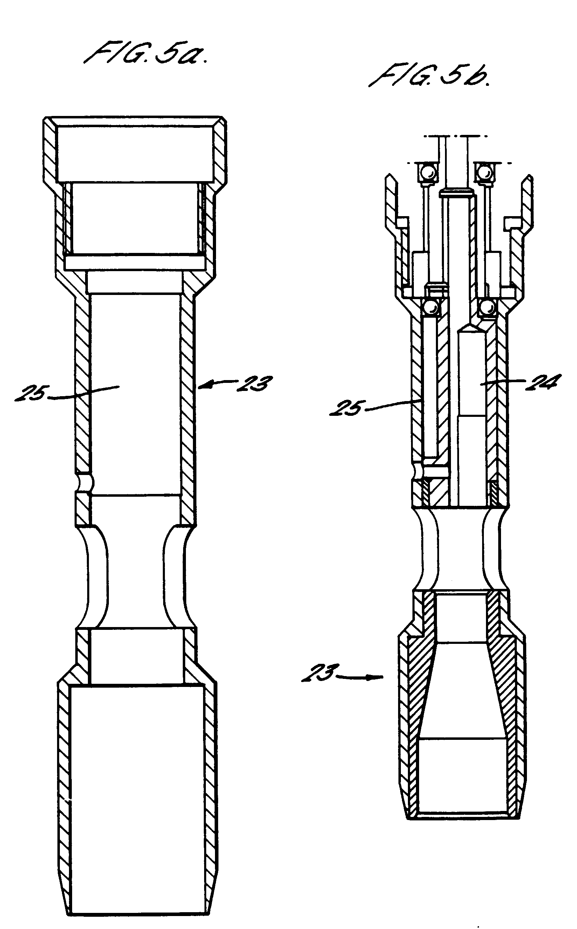

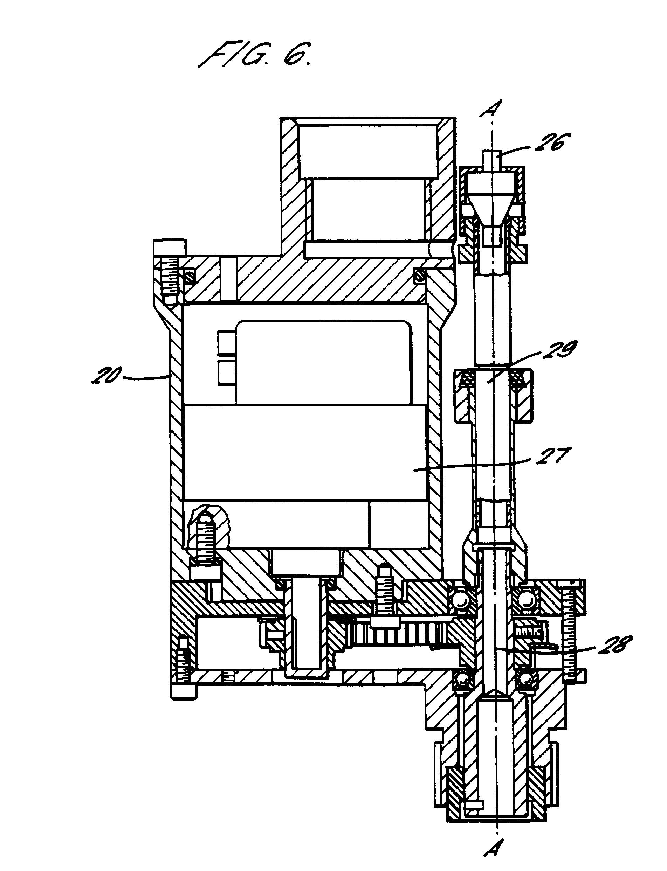

Figures 4a and 4b show the external plan of the bottom and top of a reading device. The reading head 20 is connected by bellows 21 (which are optional) to the extension tube 22 (a series of 1 to 1.5m extension tubes for approximately 8 m in length) for operation by the flexible bellows 21. Figures 5a, 5b and 6 show respectively the adapter 23 containing the transducer 24 and the reading device. The eccentric positicn of the reading head 20 relative to the general axis A of the reading device is to be noted, which allows the cable 30 to emerge coaxially to the transducer barrel 25 in which the transducer 24 is disposed in an eccentric hole 25a (see Figure 1). The use of a rotary electric transmission 26 in Figure 6 ensures the connection of the transducer 24 with the surface appliances (see Figures 1 and 3). Figure 6 depicts the rotary transmission 26, a motor/reducer 27 and component 28 comprises a set of gears and belt for transmitting rotation to the shaft connected to the transducer barrel 25. A protective tubing 29 is also provided which can rotate and which allows mounting/dismounting of the transducer 24 and of the rotary transmission 26 with related connecting cable 30. The motor/reducer 27 is water-tight and component 28 can operate in water.

The reading device can be used either under water or on site, or in air conditions such as an office or laboratory.

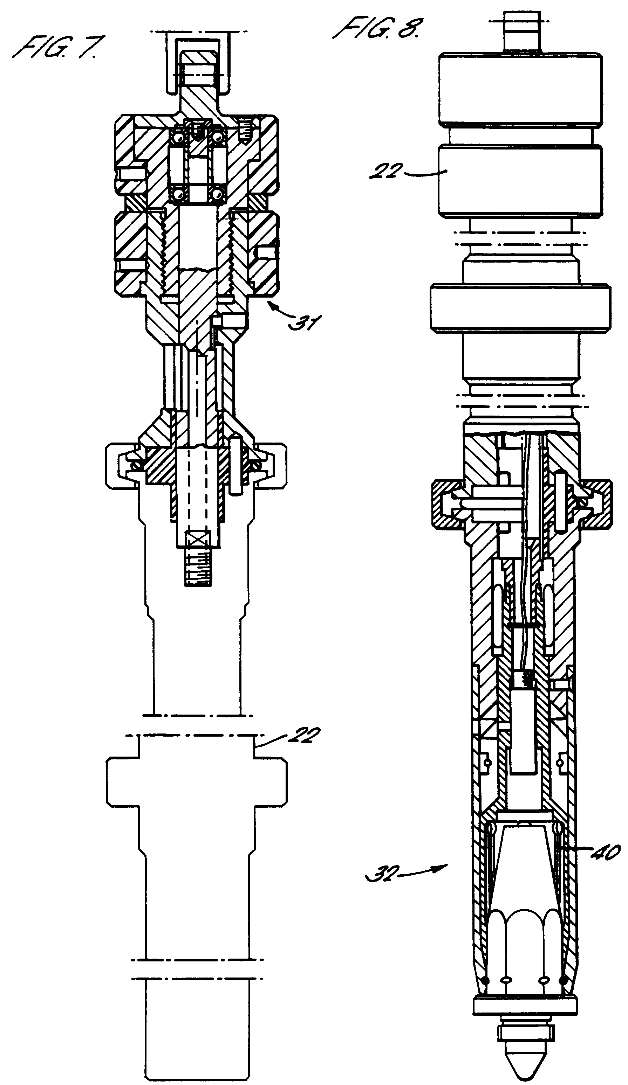

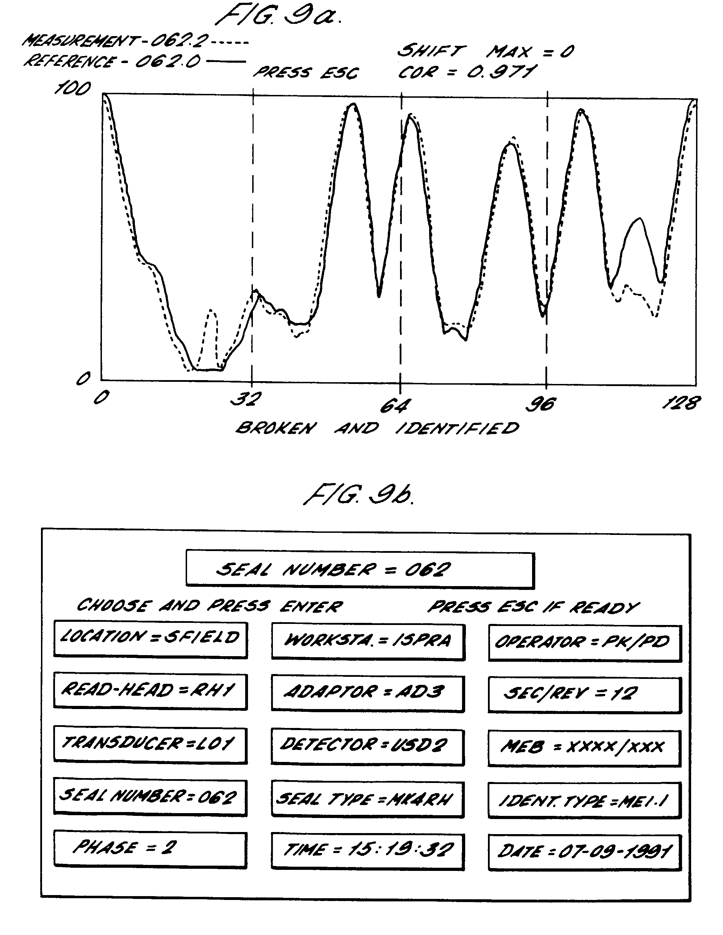

Figures 7 and 8 show the fitting implement, having an upper part 31 (handle) and a lower part 32 (clamp), said implement of original design making it possible to unscrew and grip a normal bolt, to fit and tighten to the correct torque a normal bolt or sealing bolt, to break and remove (or leave) a sealing bolt, all these operations are carried out remotely at a distance of several metres, under water and, if a torque has to be controlled, by means of a torque wrench. The handle 31 and clamp 32 are separated by extension tube 22 having sections 1 to 1.5m long which can be added according to end requirements. Inside the extension tube (22), a sliding rod is guided and can be assembled with as many extension sections as the tube (22). The sliding rod allows thrust to be transmitted to the clamp from the rotating ring of the handle by means of a threaded element. The clamp 32 is provided with six blades 40 which grip the hexagonal portion of the head 1 of a sealing bolt. In the embodiment depicted in Figure 8, an optional transducer was inserted for use in cloudy waters in order to trigger a signal when the reading device is actually fitted on a sealing bolt.

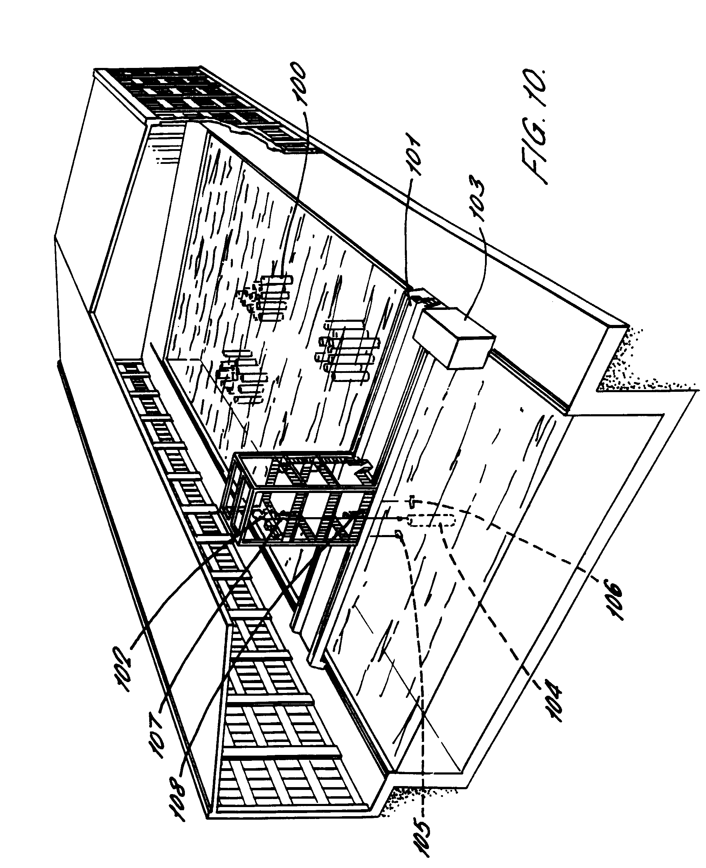

To enable ultrasonic reading to take place, a measuring station, uses a flaw detector of commercial type, to which the reading head transducer is connected. In turn, it is connected to a computer which can control it and the operating software which was developed by the applicants. When the transducer is caused to rotate above the seal, it "sees" the faults and the echo signal is recorded. The fault reader enters in the memory at each instant the highest peak observed in a precalibrated window. During one revolution, a signal of the type shown in Figure 9a is obtained. This signal is digitised and entered in the memory. It is retrieved when effecting a verification and it is compared by correlation with the new quantity. If the coefficient of correlation is above a given threshold (for example 0.9), the sealing bolt is identified. Moreover, if the characteristic trough (small zone without a signal) is replaced by a hump, this is proof that the seal has been unscrewed and that its breaking bar la or frangible element has been broken which means that its integrity has been violated. This point is very important in this technique, since with a single reading it is possible to verify the identity and integrity of the seal. Figure 9b shows a series of operating parameters of the kind issued when using the system in a laboratory.

To complete this system, a complete procedure for use by inspectors has been devised. It comprises a rolling programme which guides the operator to carry out the fitting, the verification and the removal of a sealing-bolt, either in the laboratory (by means of a reading head on a stand) or, much more significantly, on site, namely above the storage "pond" of a nuclear installation, as in Figure 10.

In Figure 10, a storage "pond" is shown in which are emersed a number of storage containers 100. There is a pond handler 101 which extends across the width of the pond on which an inspection unit 102 is located. The pond handler 101 is driven by a driver 103 which is capable of sliding the pond handler 101 along the length of the pond to access the various containers 100. The container under inspection 104 is illuminated by an underwater spotlight 105 and monitored by an underwater CCTV 106. Inspectors 107 and 108 are able to operate the instrumentation on inspection unit 102.

Figure 11 depicts an alternative embodiment of a sealing bolt means in accordance with the present invention. In this embodiment, the body of the sealing bolt means comprises a hollow shaft 54 and clamping elements 55 rather than a threaded shank. There is a pre-installed dowel or pin D having a transversal hole E therethrough. Clamping elements 55 lock into the trasversal hole E. As in the Figure 2a embodiment, an internal thread 58 is the reaction means for breaking the frangible element 1a (not shown) in core 52. The clamping elements 55 ensure that the lid A (or upper collar) cannot be separated from the body B (or shock-absorber) until the frangible element is broken.

In Figure 11, the transverse hole E and clamping elements 55 could alternatively be replaced by an internal thread which could co-operate with a threaded dowl or pin extending from the container.

Figures 12a and 12b depict a sealing bolt Y in accordance with the present invention which has been secured to a structure via an intermediate plate 60. The intermediate plate 60 is used when the sealing bolt cannot be secured directly to a container or structure because the =ontainer/ structure cannot be drilled to accept the shank 4 of the sealing bolt. The intermediate plate 60 is attached to the container/structure A by means of four screws 61. The head 1 of the sealing bolt should be secured to the intermediate plate 60 such that it overlaps at least one of the screws 61, thereby preventing removal of the intemdiate plate without tampering with the sealing bolt. An 0-ring 62 is provided between the head 1 and intermediate plate 60. This type of identification is referred to as "tagging". Figure 12a is a side view for the sealing bolt in position on a container/structure (A) and Figure 12b is a view from above in direction Z in Figure 12a.

Finally, Figure 13 depicts an ultrasonic testing system in accordance with the present invention in use on a laboratory workbench.

The testing system shown in Figure 13 includes the sealing bolt reading device 71 comprising a reading head 72, a motor/reducer box 73, an adapter 74 and a rotating transducer 75.

A sealing bolt holder 77 is located below the motor/reducer box 73. A vertically moveable water vessel 76 is able to pour water between the rotating transducer 75 and the sealing bolt holder 77. A flexible water tubing 78 connects the water vessel 76 with the holder 77. The sealing bolt 79 under measurement is located below the rotating transducer 75. An ultrasonic flaw detector 82 is also provided - this device could be replaced by electronic boards in a laptop computer. A PC 83 is located with the necessary software to control the verification operations and a printer 84 prints the protocol of each measurement (curves and operating parameters). The control switch 85 controls the motor which drives the rotating transducer 75.

The advantages of the present invention are as follows:

The sealing-bolt is incorporated in the structure of a normal bolt and can replace it.

It requires no modification to the container or to the cover/lid.

It uses random, permanent internal marking and materials which are resistant to radiation.

This original type of marking is suitable for standardised manufacturing but which nevertheless allows the production of large series of random signatures or identities. This constitutes one element of the invention.

It is robust and shock-resistant.

Its identity and its integrity are read in the course of a single reading.

If a sealing-bolt is untightened or an attempt is made to do so, its integrity is violated and this can be recognised.

The associated equipment is simple to use and is suitable for use in "ponds" and dry conditions as well. Furthermore, the essential functions of the ultrasonic equipment can be installed in electronic cards suitable for installation into portable computers.

The breaking mechanism is incorporated in the sealing-bolt.

Merely unscrewing the bolt causes its integrity to be violated.

It is able to serve as an identification means, i.e mounting on a structure to be identified without it having a "sealing" function.

It is also suitable for reading in the open air, which is a great advantage if it is intended to secure such a bolt, for example, as a "marker" to a military tank or for sealing dry storage containers.

## Claims

1. A sealing bolt means for sealing the lid (A) of a container to the body (B) of a container, the sealing bolt means comprising a head (1) and a body (4) which interlocks the lid and body of the container, the internal structure of the head being constructed such that it is at least partially deformed when an attempt is made to remove the sealing bolt means from the container onto which the bolt has been secured and tightened wherein the internal structure of the head (1) comprises a plurality of randomly arranged stacked discs (1b), each disc having one or more voids therein so that when the stack has been brazed a specific identity is provided for each sealing bolt means.

2. A sealing bolt means as claimed in Claim 1, wherein the body (4) has a threaded shank which can be threaded into the container.

3. A sealing bolt means as claimed in Claim 1, wherein the body (4) is hollow and comprises clamping elements to secure the sealing bolt means to a pre-installed dowel or pin which interlocks the lid and body of the container.

4. A sealing bolt means as claimed in any preceding claim, wherein the internal structure of the head (1) comprises a pattern of cavities which can be sensed ultrasonically.

5. A sealing bolt means as claimed in any preceding claim, further comprising a frangible element (1a) within the internal structure of the head (1) which breaks in a predetermined position when an attempt is made to remove the sealing bolt means from the container.

6. A sealing bolt means as claimed in Claim 5, wherein the frangible element (1a) has a region of reduced thickness thereby providing a weak point in the element.

7. A sealing bolt means as claimed in Claim 6, wherein the frangible element (1a) is formed b on a delay line block (1c), the stacked discs (1b) and delay line block (1c) being brazed together to produce a core.

8. A sealing bolt means as claimed in any preceding claim, wherein the head (1) is adapted to co-operate with a reading device (23) which can generate an ultrasonic signal and compare the ultrasonic signal reflected by the internal structure of an untampered sealing bolt means with that reflected by a tampered sealing bolt means or a sealing bolt means which becomes loosened after having not been tightened adequately.

9. Use of the sealing bolt means according to any preceding claim in combination with a reading device comprising a transducer (24) which can generate an ultrasonic signal and sense the signal reflected by the internal structure of the sealing bolt means.

10. Use of the sealing bolt means as defined in Claim 1 in a method of testing for tampering of the sealing bolt means comprising the steps of applying a reading means (23) to the head (1) of the sealing bolt means, generating an ultrasonic signal and sensing the signal reflected from the internal structure of the sealing bolt means, and comparing the reflected signal with the signal reflected from an untampered sealing bolt means to determine whether tampering has occurred or whether the sealing bolt means has been untightened or removed.

11. A method of testing as claimed in Claim 10, wherein both the specific identity and the integrity of the internal structure are read simultaneously.

12. Use of the sealing bolt means as defined in claim 1 in combination with a reading device comprising a reading head (20, 23), means for fitting the reading device (23) to the sealing bolt means, a transducer (24) and ultrasonic signal generating means, which device determines the identity and/or integrity of the internal structure of the sealing bolt means, wherein the transducer rotates in close vicinity to the sealing bolt means thereby recording the ultrasonic signal reflected from the internal structure of the sealing bolt means.

## Patentansprüche

1. Abdichtbolzeneinrichtung zum Abdichten eines Deckels (A) eines Behälters an dem Körper (B) eines Behälters, wobei die Abdichtbolzeneinrichtung folgendes aufweist: einen Kopf (1) und einen Körper (4), der den Deckel und den Körper des Behälters miteinander verriegelt, wobei die Innenkonstruktion des Kopfs derart ausgebildet ist, daß er zumindest teilweise verformt wird, wenn versucht wird, die Abdichtbolzeneinrichtung von dem Behälter, an dem der Bolzen befestigt und angezogen worden ist, zu entfernen, wobei die Innenkonstruktion des Kopfes (1) eine Vielzahl von beliebig angeordneten gestapelten Scheiben (1b) aufweist, wobei jede Scheibe ein oder mehr Hohlräume darin hat, so daß, wenn der Stapel hartgelötet worden ist, eine bestimmte Identität für jede Abdichtbolzeneinrichtung gebildet ist.

2. Abdichtbolzeneinrichtung nach Anspruch 1, wobei der Körper (4) einen Gewindeschaft hat, der in den Behälter geschraubt werden kann.

3. Abdichtbolzeneinrichtung nach Anspruch 1, wobei der Körper (4) hohl ist und Klemmelemente aufweist, um die Abdichtbolzeneinrichtung an einem vormontierten Dübel oder Zapfen zu befestigen, der den Deckel und den Körper des Behälters miteinander verriegelt.

4. Abdichtbolzeneinrichtung nach einem der vorhergehenden Ansprüche, wobei die Innenkonstruktion des Kopfes (1) eine Hohlraumstruktur aufweist, die mit Ultraschall erfaßt werden kann.

5. Abdichtbolzeneinrichtung nach einem der vorhergehenden Ansprüche, die ferner ein brechbares Element (1a) innerhalb der Innenkonstruktion des Kopfes (1) aufweist, das in einer vorbestimmten Position bricht, wenn versucht wird, die Abdichtbolzeneinrichtung von dem Behälter zu entfernen.

6. Abdichtbolzeneinrichtung nach Anspruch 5, wobei das brechbare Element (1a) einen Bereich verringerter Dicke hat, so daß eine Schwachstelle in dem Element gebildet ist.

7. Abdichtbolzeneinrichtung nach Anspruch 6, wobei das brechbare Element (1a) an einem Laufzeitblock (1c) gebildet ist, wobei die gestapelten Scheiben (1b) und der Laufzeitblock (1c) miteinander hartverlötet sind, um einen Kern zu bilden.

8. Abdichtbolzeneinrichtung nach einem der vorhergehenden Ansprüche, wobei der Kopf (1) ausgebildet ist, um mit einer Leseeinrichtung (23) zusammenzuwirken, die ein Ultraschallsignal erzeugen und das von der Innenkonstruktion einer nicht-mißbrauchten Abdichtbolzeneinrichtung reflektierte Ultraschallsignal mit demjenigen vergleichen kann, das von einer mißbrauchten Abdichtbolzeneinrichtung oder einer Abdichtbolzeneinrichtung reflektiert, die sich nach ungenügendem Anziehen lockert.

9. Verwendung der Abdichtbolzeneinrichtung nach einem der vorhergehenden Ansprüche in Kombination mit einer Leseeinrichtung, die einen Wandler (24) aufweist, der ein Ultraschallsignal erzeugen und das von der Innenkonstruktion der Abdichtbolzeneinrichtung reflektierte Signal erfassen kann.

10. Verwendung der Abdichtbolzeneinrichtung nach Anspruch 1 bei einem Verfahren zum Prüfen auf Mißbrauch der Abdichtbolzeneinrichtung, wobei das Verfahren die folgenden Schritte aufweist: Anlegen einer Leseeinrichtung (23) an den Kopf (1) der Abdichtbolzeneinrichtung, Erzeugen eines Ultraschallsignals und Erfassen des von der Innenkonstruktion der Abdichtbolzeneinrichtung reflektierten Signals und Vergleichen des reflektierten Signals mit dem von einer nicht-mißbrauchten Abdichtbolzeneinrichtung reflektierten Signal, um zu bestimmen, ob ein Mißbrauch stattgefunden hat oder ob die Abdichtbolzeneinrichtung gelockert oder entfernt worden ist.

11. Prüfverfahren nach Anspruch 10, wobei sowohl die bestimmte Identität als auch die Integrität der Innenkonstruktion gleichzeitig gelesen werden.

12. Verwendung der Abdichtbolzeneinrichtung nach Anspruch 1 in Kombination mit einer Leseeinrichtung, die folgendes aufweist: einen Lesekopf (20, 23), Mittel zum Anbringen der Leseeinrichtung (23) an die Abdichtbolzeneinrichtung, einen Wandler (24) und Ultraschallsignal Erzeugungsmittel, wobei die Einrichtung die Identität und/oder Integrität der Innenkonstruktion der Abdichtbolzeneinrichtung bestimmt, wobei sich der Wandler in enger Nachbarschaft zu der Abdichtbolzeneinrichtung dreht, so daß er das von der Innenkonstruktion der Abdichtbolzeneinrichtung reflektierte Ultraschallsignal aufzeichnet.

## Revendications

1. Moyen de vis de fermeture étanche pour fixer le couvercle (A) d'un récipient à joint étanche au corps (B) d'un récipient, le moyen de vis de fermeture étanche comprenant une tête (1) et un corps (4) qui assemble le couvercle au corps du récipient, la structure intérieure de la tête étant construite de telle manière qu'elle se déforme au moins partiellement si l'on tente d'enlever le moyen de vis de fermeture étanche du récipient sur lequel la vis a été fixée et serrée, dans lequel la structure intérieure de la tête (1) comprend une pluralité de disques (1b) empilés, disposés de façon aléatoire, chaque disque présentant intérieurement un ou plusieurs vides de sorte que, lorsque la pile a été brasée, une identité spécifique est conférée à chaque moyen de vis de fermeture étanche.

2. Moyen de vis de fermeture étanche selon la revendication 1, dans lequel le corps (4) possède une tige filetée qui peut être vissée dans le récipient.

3. Moyen de vis de fermeture étanche selon la revendication 1, dans lequel le corps (4) est creux et comprend des éléments de serrage pour fixer le moyen de vis de fermeture étanche à un goujon ou une cheville préinstallé(e) qui assemble le couvercle et le corps du récipient.

4. Moyen de vis de fermeture étanche selon une quelconque des revendications précédentes, dans lequel la structure intérieure de la tête (1) comprend une distribution de cavités qui peut être captée par voie ultrasonore.

5. Moyen de vis de fermeture étanche selon une quelconque des revendications précédentes, comprenant en outre un élément de rupture (1a) placé à l'intérieur de la structure intérieure de la tête (1), qui se brise dans une position prédéterminée lorsqu'on tente d'enlever le moyen de vis de fermeture étanche du récipient.

6. Moyen de vis de fermeture étanche selon la revendication 5, dans lequel l'élément de rupture (la) possède une région d'épaisseur réduite, en réalisant ainsi un point faible dans l'élément.

7. Moyen de vis de fermeture étanche selon la revendication 6, dans lequel l'élément de rupture (1a) est formé d'un bloc (1c) à ligne à retard, les disques empilés (1b) et le bloc (1c) à ligne à retard étant brasés ensemble pour former un noyau.

8. Moyen de vis de fermeture étanche selon une quelconque des revendications précédentes, dans lequel la tête (1) est adaptée pour coopérer avec un dispositif de lecture (23) qui peut engendrer un signal ultrasonore et comparer le signal ultrasonore réfléchi par la structure intérieure d'un moyen de vis de fermeture étanche non manipulé indûment à celui réfléchi par un moyen de vis de fermeture étanche manipulé indûment ou par un moyen de vis de fermeture étanche qui prend du jeu après avoir été serré de façon inadéquate.

9. Utilisation d'un moyen de vis de fermeture étanche selon une quelconque des revendications précédentes, en combinaison avec un dispositif de lecture comprenant un capteur (24) qui peut engendrer un signal ultrasonore et capter le signal réfléchi par la structure intérieure du moyen de vis de fermeture étanche.

10. Utilisation d'un moyen de vis de fermeture étanche selon la revendication 1, dans un procédé de contrôle de manipulation indue du moyen de vis de fermeture étanche comprenant les phases consistant à appliquer un moyen de lecture (23) à la tête (1) du moyen de vis de fermeture étanche, engendrer un signal ultrasonore et capter le signal réfléchi par la structure intérieure du moyen de vis de fermeture étanche, et comparer le signal réfléchi au signal réfléchi par un moyen de vis de fermeture étanche non manipulé indûment pour déterminer si une manipulation indue a eu lieu ou si le moyen de vis de fermeture étanche a été desserré ou enlevé.

11. Procédé de contrôle selon la revendication 10, dans lequel l'identité spécifique et l'intégrité de la structure intérieure sont toutes deux lues simultanément.

12. Utilisation d'un moyen de vis de fermeture étanche selon la revendication 1, en combinaison avec un dispositif de lecture comprenant une tête de lecture (20, 23), un moyen pour monter le dispositif de lecture (23) sur le moyen de vis de fermeture étanche, un transducteur (24) et un moyen générateur de signaux ultrasonores, lequel dispositif détermine l'identité et/ou l'intégrité de la structure intérieure du moyen de vis de fermeture étanche, dans laquelle le transducteur tourne dans le voisinage immédiat du moyen de vis de fermeture étanche, en enregistrant ainsi le signal ultrasonore réfléchi par la structure intérieure du moyen de vis de fermeture étanche.
